# EUROPEAN PATENT SPECIFICATION

(11) **EP 1 476 868 B1**
(45) Date of publication and mention of the grant of the patent: **28.10.2009**
(21) Application number: 03705443.4
(22) Date of filing: 10.02.2003
(51) Int. Cl.: G11B 23/03

(54) **DISK CARTRIDGE**
DATENTRÄGERKASSETTE
CARTOUCHE DE DISQUE

(30) Priority: 20.02.2002 KR 2002009087
(43) Date of publication of application: 17.11.2004
(73) Proprietor: SAMSUNG ELECTRONICS CO., LTD., Suwon-si, Gyeonggi-do 442-742 (KR); Panasonic Corporation, Kadoma-shi Osaka 571-8501 (JP)
(72) Inventor: EUM, Jae-Yong 915-601 Jugong Apt., 970-3, Suwon-si 442-470 Gyeonggi-do (KR); YIM, Hong-Kyun, 519-304 Jugong 5-danji Apt., 897, Suwon-si 442-370 Gyeonggi-do (KR); LEE, Yong-Hoon 702-1401 Salg. 7-danji Jindeok Apt, Suwon-si 442-470 Gyeonggi-do (KR); CHOI, Han-K. 202-1501 Jugong Greenvill Apt., 1260, Suwon-si 442-370 Gyeonggi-do (KR); CHUNG, Chong-Sam, 406-301 Shinyoungt. Hyundai Apt., Hwaseong-gun, 445-970 Gyeonggi-do (KR); TERUYUKI, Takizawa, Neyagawa-shi, Osaka 572-0019 (JP); YOSHITO, Saji, Nishinomiya-shi, Hyogo 662-0867 (JP)
(74) Representative: Robinson, Ian Michael
(86) International application number: PCT/KR2003/000289
(87) International publication number: WO 2003/071541

(56) References cited:
- WO-A-94/23431
- JP-A- 10 222 946
- JP-A- 2000 113 630
- JP-A- 2000 123 521
- JP-U- 61 006 974
- US-B1- 6 339 583

## Description

### Technical Field

The present invention relates to a disk cartridge for protecting a recording surface of an accommodated disk that is an information recording/reproduction medium from contaminants such as dust or finger print.

### Background Art

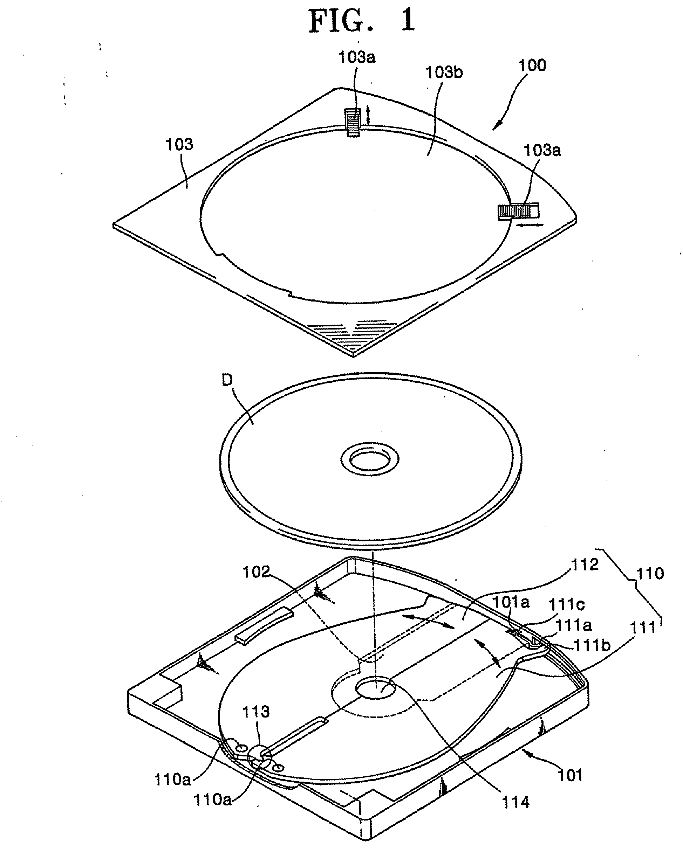

In general, a disk cartridge accommodates a disk that is an information recording/reproduction medium and is installed in a disk drive. As shown in FIG. 1, a conventional disk cartridge 100 includes a case 101 for accommodating a disk D, a shutter 110 installed in the case 101 to be capable of rotating for selectively opening or shutting an opening hole 102 formed in the case 101 so that a pickup (not shown) of a disk drive can access the disk D, and a cover 103 fixed to the upper portion of the case 101. Reference numeral 103b denotes an open hole formed in the cover 103 for disk exchange and clamping. Reference numeral 103a denotes an escape prevention lever installed at the cover 103 to be capable of sliding to prevent the disk D from escaping through the open hole 103b. Thus, when the disk D is installed, the escape prevention lever 103a is pulled back not to interfere with the disk D. After the disk installation is completed, the escape prevention lever 103a is push forward so that an end portion of the escape prevention lever 103a prevents the disk D from escaping through the open hole 103b.

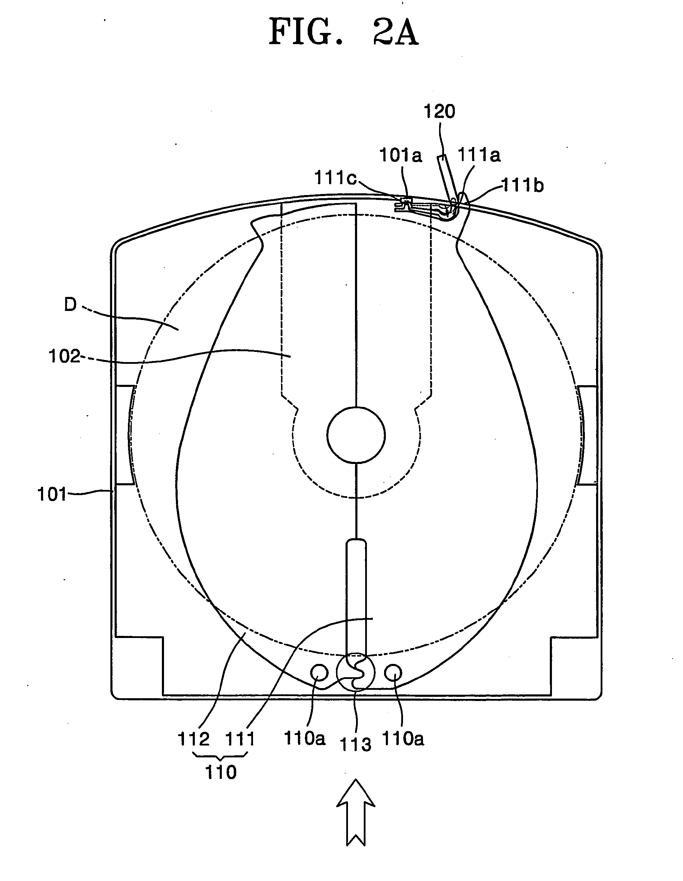

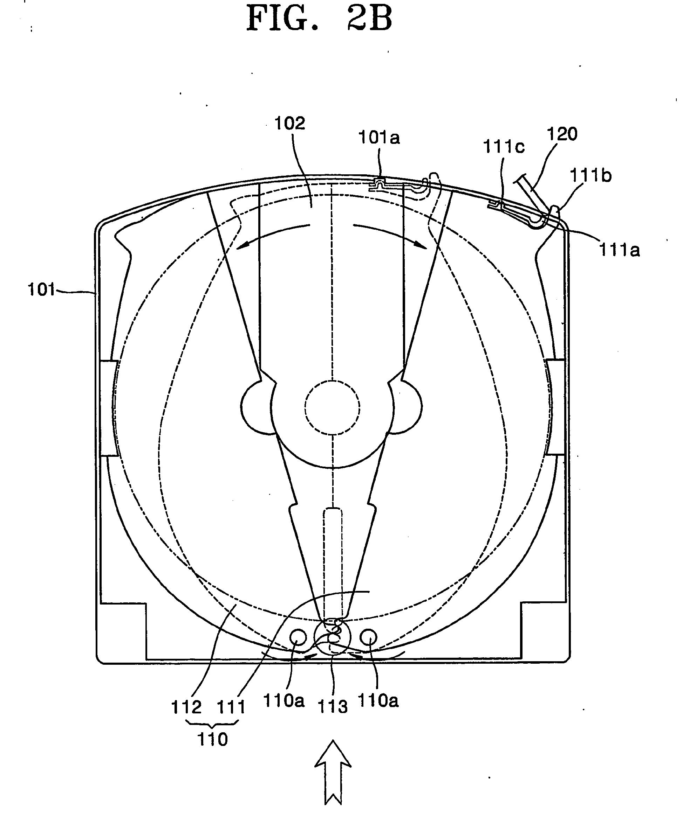

When the disk cartridge 100 accommodating the disk D is inserted into a disk drive, as shown in FIG. 2A, an opening lever 120 installed at the disk drive pushes a locking piece 111a so that a protrusion 111c of the shutter 110 is unlocked from a groove 101 a of the case 101. Then, the opening lever 120 pushes an interference piece 111 b to have the shutter 110 pivot around left and right pivot axes 110a. The shutter 110 is formed of first and second shutter portions 111 and 112 respectively installed to be capable of pivoting around left and right pivot axes 110a and engaged through an engagement gear portion 113. As the first shutter portion 111 incorporated with the interference piece 111 b rotates clockwise, the second shutter portion 112 rotates counterclockwise so that the first and second shutter portions 111 and 112 are separated apart from each other and the opening hole 102 opens. Then, a turntable (not shown) and a clamper (not shown) of the disk drive enter through the opening hole 102 and the open hole 103a to clamp the disk D. A pickup (not shown) accesses a recording surface of the disk D to perform an information recording and/or reproduction process. Although not shown in drawings, a torsion spring for elastically biasing the first shutter portion 111 in a counterclockwise direction on the drawings, that is, in a direction to close the opening hole 102, is installed between the first shutter portion 111 and the bottom surface of the case 101. When a force applied by the opening lever 120 is removed, the shutter 110 is returned to the original closed position.

However, in the above structure, since the shutter 110 is installed in the case 101 and the disk D is placed on the shutter 110, during the opening/shutting operation of the shutter 110, the shutter 110 contacts the recording surface of the disk D (a lower surface of a disk in the drawings) so that the recording surface of the disk D may be scratched by the shutter 110 and damaged.

Also, dust can intrude through the open hole 103b of the cover 103. Of course, since the upper surface of the disk D facing the open hole 103b is not a surface for recording, direct contamination due to dust does not occur. Nonetheless, as dust intrudes and placed on the shutter 110, the dust on the shutter 110 adheres to the recording surface of the disk D during the opening/shutting operation. Therefore, an improved structure to protect the information area of a disk is needed.

US-B1-6,339,583 discloses an apparatus capable of preventing deformation of a disk in a cartridge during storage, where a plate spring is provided on the back surface of a shutter of the cartridge. The claims have been characterised based on this document.

WO94/23431 discloses the features of the preamble of claim 1.

### Disclosure of the Invention

To solve the above-described problems, it is an object of the present invention to provide an improved disk cartridge which can protect the information area of a disk from being contaminated during the opening/shutting operation of the shutter installed in the case.

To achieve the above object, there is provided a disk cartridge comprising a lower case having an opening hole formed therein, an upper case, installed at the lower case to be capable of being open and shut while pivoting, for accommodating a disk together with the lower case, a shutter, installed at the lower case to be capable of sliding, for opening and shutting the opening hole, a covering member installed at the shutter to be capable of sliding, the covering member closely contacting a non-information area at an inner circumference of the disk when the shutter is closed and being separated from the non-information area at an inner circumference of the disk when the shutter is open.

It is preferred in the present invention that the covering member comprises a space portion having an inclined surface, the space portion closely contacting or being separated from the non-information area at an inclined circumference of the disk while it rises or is lowered along an inner inclined surface of a cut-away portion formed in the shutter, a sliding portion sliding along a slot formed in the shutter during opening/shutting of the shutter, and a lever portion connecting the space portion and the sliding portion and to be capable of being elastically deformed.

It is preferred in the present invention that a sealing member is provided on the upper surface of the space portion so that the non-information area at an inner circumference of the disk closely contacts the covering member.

It is preferred in the present invention that, since an inclined portion is provided at the slot, when the space portion rises, the sliding portion rises from the lower surface of the shutter, and when the space portion is lowered, the sliding portion is lowered to the lower surface of the shutter.

It is preferred in the present invention that an interference portion for interfering such that the sliding portion is smoothly lowered when the shutter is open is provided at the lower case.

It is preferred in the present invention that the interference portion is disposed at an angle less than the maximum open angle of the shutter.

It is preferred in the present invention that a parking portion having is formed at the lower case so that the space portion is disposed at the parking portion when the shutter is open.

It is preferred in the present invention that a protrusion having an inclined surface and supporting the non-information area of the disk is provided at the shutter so that, when the shutter is open, the disk rises along the inclined surface to closely contact the upper case.

It is preferred in the present invention that a protrusion for supporting the non-information area at the inner circumference of the disk that is lowered along the inclined surface is provided at the lower case.

It is preferred in the present invention that a sealing member is provided at the upper case at a portion of contacting the non-information area of the disk so that the disk closely contact the sealing member.

### Brief Description of the Drawings

FIG. 1 is a perspective view of a conventional disk cartridge;
FIGS. 2A and 2B are plan views showing the state of opening/shutting of a shutter of the disk cartridge shown in FIG. 1;
FIG. 3 is an exploded perspective view of a disk cartridge according to a preferred embodiment of the present invention;
FIG. 4 is a view showing the state in which the disk cartridge of FIG. 3 is assembled;
FIG. 5 is a perspective view showing the covering member shown in FIG. 3;
FIG. 6 is a plan view showing the state in which the shutter is closed in the disk cartridge of FIG. 3;
FIG. 7 is a sectional view taken along line IV-IV of FIG. 6;
FIG. 8 is a plan view showing the state in which the shutter is open in the disk cartridge of FIG. 3;
FIG. 9 is a sectional view taken along line V-V of FIG. 8;
FIG. 10 is a sectional view schematically showing the operation relationship between the covering member and the guide hole when the shutter is open; and
FIG. 11 is a sectional view schematically showing the operation relationship between the covering member and the guide hole when the shutter is closed.

### Best mode for carrying out the Invention

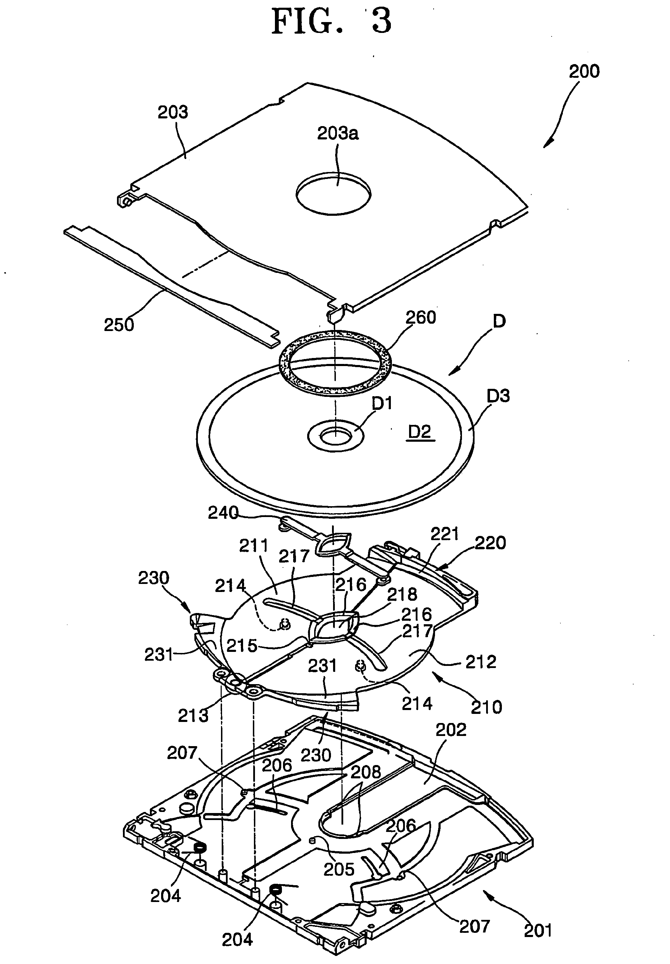

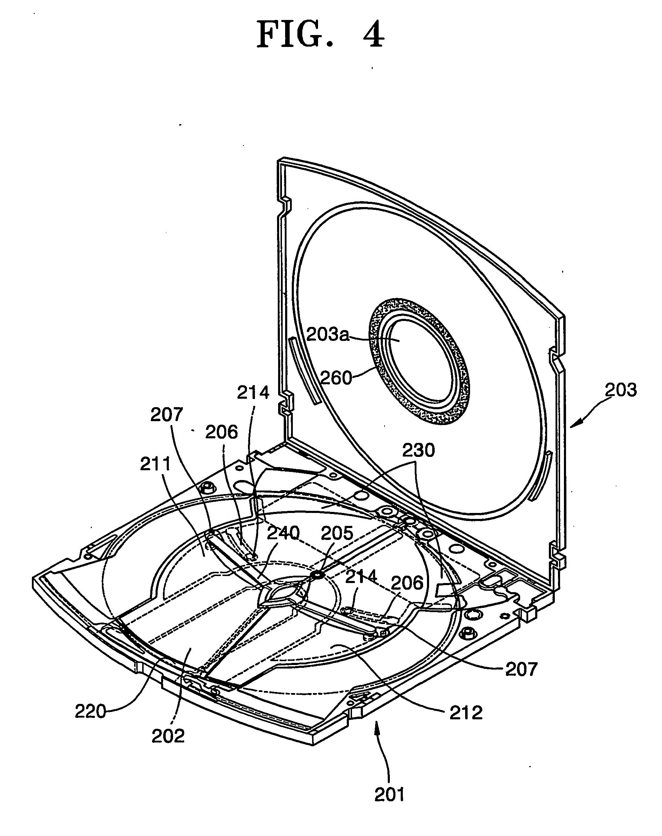

Referring to FIGS. 3 and 4, a disk cartridge 200 according to a preferred embodiment of the present invention includes a lower case 201 having an opening hole 202 where a turntable (not shown) on which a disk D is placed and an optical pickup device (not shown) are disposed by being inserted into a disk player (not shown), an upper case 203 installed at the lower case 201 to be capable of being open and shut while pivoting for accommodating a disk together with the lower case 201, a shutter 210 installed at the lower case 201 to be capable of sliding for opening and shutting the opening hole 202, and a covering member 240 for preventing an information area D2 of the disk D from being contaminated by dust which is lowered with respect to the shutter 210 when the shutter 210 is open, and rises with respect to the shutter 210 when the shutter 210 is closed, to closely contact the inner circumference of the disk D, that is, at a clamping area D1.

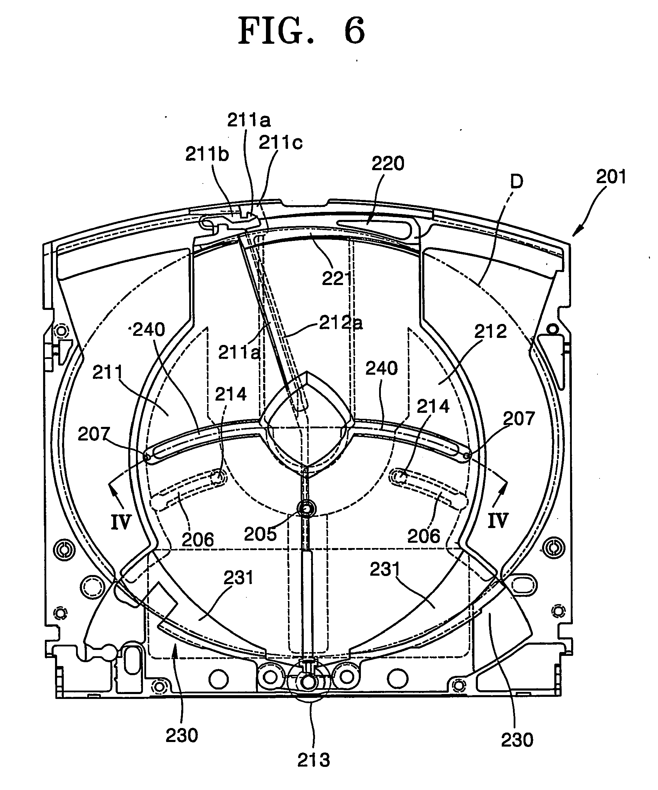

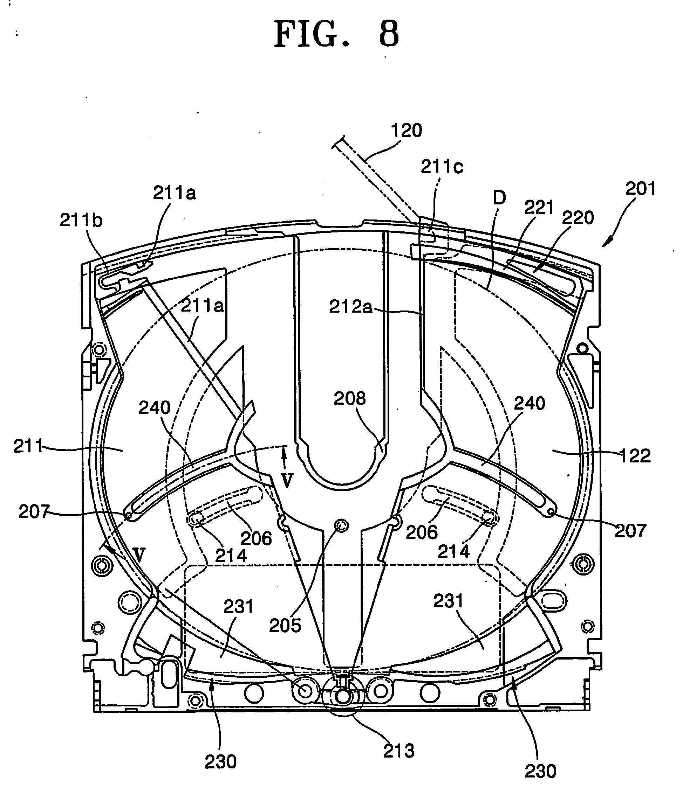

The shutter 210 is formed of first and second shutters 211 and 212 installed inside the lower case 201 to be capable of pivoting symmetrically. Thus, as the first and second shutter portions 211 and 121 pivot in a direction in which they are separated apart from each other, the opening hole 202 is open (refer to FIG. 8). When the first and second shutter portions 211 and 121 pivot in the opposite direction in which they are close to each other, the opening hole 202 is closed (refer to FIG. 6). Reference numeral 213 denotes a connection portion for making the first and second shutter portions 211 and 212 interact. Accordingly, as the first shutter portion 211 pivots, the second shutter portion 212 pivots in the opposite direction by means of the connection portion 213. A torsion spring 204 for elastically biasing the first and second shutter portions 211 and 212 in the directions of closing the opening hole 202, is installed between the bottom surface of the lower case 201 and each of the first and second shutter portions 211 and 212. When a force applied by the opening lever 120 (refer to FIG. 8) is removed, the shutter 210 returns to the original closed position.

Protrusions 230 and 220 contacting an edge portion D3 of the outer circumference of the disk D are formed at the first and second shutter portions 211 and 212, respectively. That is, the disk D includes a clamping area D1 at the inner circumference, an information area D2 where information is recorded, and an edge portion D3 disposed outside the information area D2. Since the edge portion D3 that is one of the non-information areas is supported by the protrusions 220 and 230, contact between the information area D2 and the shutter 201 can be avoided. The protrusions 220 and 230 have inclined surfaces 221 and 231 that are inclined toward the center of the accommodated disk D, respectively. Thus, as shown in FIG. 6, when the first and second shutter portions 211 and 212 are closed, the edge portion D3 of the disk D is supported by the upper ends of the protrusions 220 and 230. When the first and second shutter portions 211 and 212 are open, as shown in FIG. 8, the disk D is lowered along the inclined surfaces 221 and 231. The clamping area D1 of the lowered disk D at the inner circumference thereof is supported by the protrusion 205 formed at the case 201. Thus, since the disk D does not contact the first and second shutter portions 211 and 212, when the shutter portions 211 and 212 are open, the information area of the disk D is not scratched. A hole 215 into which the first protrusion 205 is inserted is formed at each of the first and second shutter portions 211 and 212. A plurality of second protrusions 214 are provided at the rear surface of the first and second shutter portions 211 and 212. A slot 206 is formed in the lower case 201 corresponding to the second protrusions 214 so as not to be interfered with the second protrusions 214 when the shutter 210 is open/shut. Thus, when an external force is applied to the first and second shutter portions 211 and 212, the information area D2 of the disk D supported by the second protrusions 214 is prevented from being contacted by the first and second shutter portions 211 and 212.

A cut-away portion 216 having a half-oval shape is formed at each of the first and second shutter portions 211 and 212 so that a through hole 218 is formed at the center when the first and second shutter portions 211 and 212 are closed. When the disk D is picked out by opening the upper case 203, a user easily pick the disk D by inserting a finger into the center hole of the disk D. If the through hole 218 is formed at the shutter 210, the user can bent the finger after inserting it deeper through the center hole of the disk D so that picking the disk D is made easy. Also, when dust is accumulated on the upper surface of the shutter 210 facing the disk D, the dust can be exhausted through the through hole formed in the shutter 210.

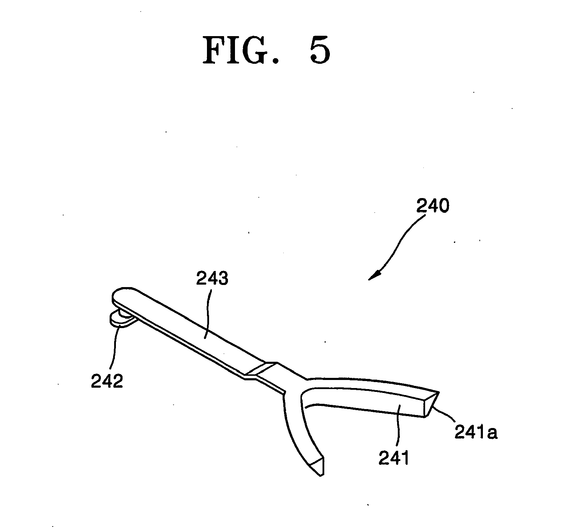

The cut-away portion 216 is formed to be inclined at a predetermined angle. This is to allow a space portion 241 (refer to FIG. 5) having an inclined portion 241 a formed therein which will be described later to be raised or lowered along the cur-away portion 216.

Reference numeral 250 denotes a spring cover coupled to the lower case 210.

FIG. 5 is a magnified view of the covering member shown in FIG. 3. Referring to drawing, the covering member 240 is provided at each of the first and second shutter portions 211 and 212 and includes a space portion 241 having a half-oval shape and where the inclined portion 241 a is formed to be capable of rising or lowering along the cut-away portion 216 of the shutter 210, a sliding portion 242 installed to be capable of sliding along a guide hole 217 (refer to FIG. 3) formed in the shutter 210, and a lever portion 243 connecting the space portion 241 and the sliding portion 242 and to be capable of being elastically deformed.

When the shutter 210 is closed, the space portion 241 provided at each of the first and second shutter portion 211 and 212 rises along the cut-away portion 216 so that both ends contact each other and the upper surface of the space portion 241 closely contacts the clamping area D3 of the disk D. When the shutter 210 is open, the space portion 241 is lowered along the cut-away portion 216 and separated from each other so as to be separated from the clamping area D3 of the disk D.

A sealing member is preferably provided on the upper surface of the space portion 241 to prevent intrusion of foreign material such as dust as it closely contacts the clamping area D1 of the disk D. The sealing member is preferably formed of a material, for example, non-woven fabric, capable of being elastically deformed when receiving a pressing force.

A parking portion 208 (refer to FIG. 3) is formed at the lower case 201 so that, when the shutter 210 is open, the space portion 214 is inserted. The inclined portion 241 a of the space portion 241 is preferably formed at a portion contacting the space portion 241 to be inclined to be capable of sliding.

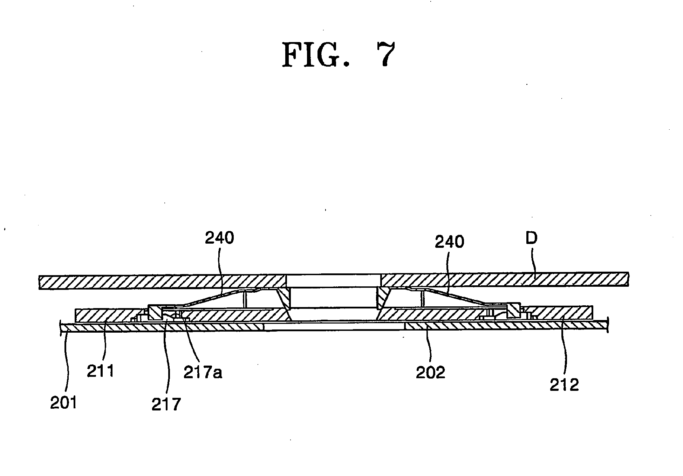

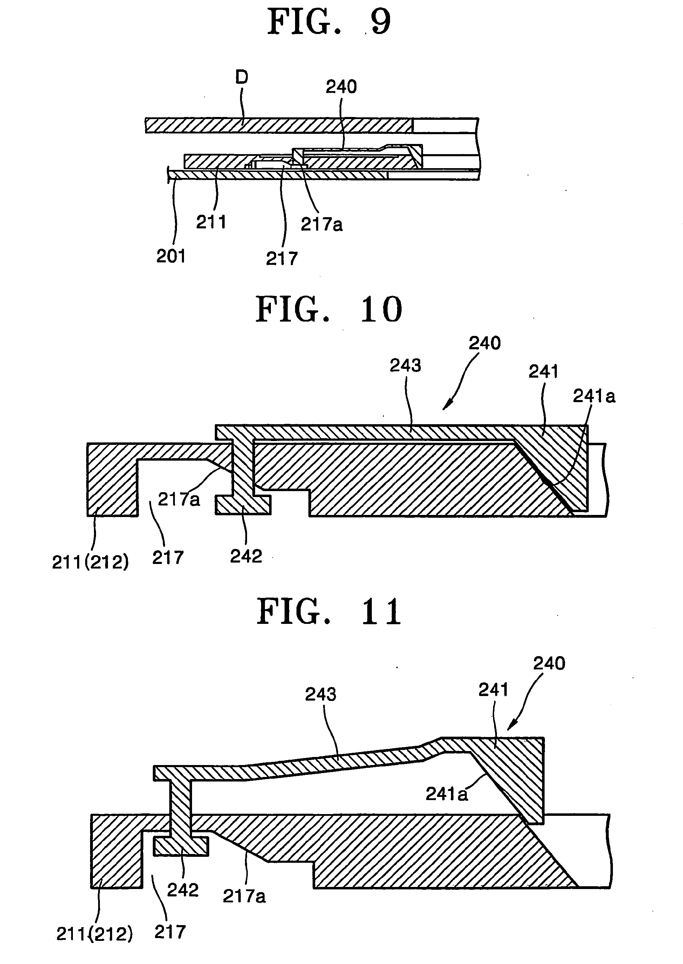

An inclined surface 217a is provided at the guide hole 217, as shown in FIGS. 7 and 9. When the space portion 241 risers, the sliding portion242 rises from the lower surface of the shutter 210. When the space portion 241 is lowered, the sliding portion 242 is lowered to the lower surface of the shutter 210. That is, when the shutter 210 is closed, since the sliding portion 242 is disposed at the rising position from the lower surface of the shutter 210, the space portion 241 rises along the cut-away portion 216 so that the lever portion 243 can be easily elastically deformed.

On the contrary, when the shutter 210 is open, since the sliding portion242 is disposed at the lower surface of the shutter 210 and inserted into the guide hole 217, a spindle motor (not shown) can be stably operated without interference.

An interference portion 207 (refer to FIG. 3) protrudes from the lower case 201 to interfere the sliding portion 242 so that the space portion 241 is smoothly inserted into the parking portion 208. The interference portion 207 is preferably disposed at the lower case 201 within an angle less than the maximum open angle of the shutter 210. A sliding groove (not shown) is preferably formed the rear surface of the shutter 210 so that the shutter 210 being opened or shut is not interfered with the interference portion 207.

A clamping hole 203a (refer to FIG. 3) is formed in the upper case 203 into which a clamping apparatus entering the disk drive and clamping the disk D is inserted. A sealing member 260 is preferably provided around the clamping hole 203a to prevent intrusion of foreign material such as dust through the clamping hole 203a so that the information area D2 of the disk D is secondarily prevented from being contaminated by dust. The sealing member 260 can be provided to contact an edge portion D3 at the outer circumference of the disk D.

The operation of the disk cartridge according to a preferred embodiment of the present invention will be described with reference to the attached drawings.

FIG. 6 is a plan view showing a state in which the shutter of the disk cartridge of FIG. 3 is closed. FIG. 7 is a sectional view taken along line IV-IV of FIG. 6. FIG. 8 is a plan view showing a state in which the shutter of the disk cartridge of FIG. 3 is open. FIG. 9 is a sectional view taken along line V-V of FIG. 8. FIG. 11 is a sectional view showing the operational relationship between the sealing member and the guide hole when the shutter is closed.

Referring to FIGS. 8, 9 and 10, the disk cartridge 200 where the disk D is loaded, as shown in FIGS. 6, enters a disk drive apparatus (not shown) in the state in which the shutter 210 is closed and the upper and lower cases 203 and 201 are closed.

As the disk cartridge 200 enters, the opening lever 120 installed at the disk drive apparatus pushes a locking piece 211 a to be unlocked from a stop portion 211 c and pushes an interference piece 211 b to have the first shutter portion 211 pivot counterclockwise on the drawing. Then, the second shutter portion 212 pivots clockwise by the engaged gear portion 213. Accordingly, the opening hole 202 is open between the first and second shutter portions 211 and 212. Here, since the protrusions 220 and 230 of the first and second shutter portions 211 and 212 only contact the disk D and the contact portion is limited to the edge portion D3 of the disk D which is a non-information area, there is little possibility of the information area of the recording surface being damaged during the opening/shutting operation of the shutter 210. As the shutter 210 is open, the disk D is lowered along the inclined surfaces 221 and 231 of the protrusions 220 and 230 and is temporarily supported on the first protrusion 205.

As both ends of the space portion 241 of the covering member 240 closely contact each other, the upper surface of the space 241 closely contacts the clamping area D1 of the inner side of the disk D. As the shutter 210 is open, the sliding portion 242 moves along the sliding hole 217. Then, the space portion 241 is lowered along the cut-away portion 216. The sliding portion 242 moves along the inclined surface 217a of the sliding hole 217 to the lower surface of the shutter 210. When the sliding portion 242 contacts the interference portion 207, the space portion 241 is inserted into the parking portion 208.

In this state, the turntable of the disk drive apparatus enters through the opening hole 202 which is open and the clamper enters through the clamping hole 203a of the upper case 203 to clamp the disk D supported by the first protrusion 205. Then, as the turntable rotates, a recording/reproduction process is performed with respect to the disk D.

Next, referring to FIGS. 5, 6, and 11, when the recording/reproduction process is completed and the clamping by the turntable and the clamper is removed, the clamping area D1 of the disk D is supported on the first protrusion 205. In this state, when the disk cartridge 200 escapes from the disk drive apparatus, the first and second shutter portions 211 and 212 pivot to their original positions and the opening hole 202 is closed. Here, the edge portion D3 at the outer circumference of the disk D rises along the inclined surfaces 221 and 231 of the protrusions 220 and 230. Thus, even when dust intrudes through the clamping hold 203a, since the edge portion D3 at the outer circumference of the disk D is closely contacting the sealing member 260, intrusion of dust in the information area D2 of the disk D is prevented.

When the shutter 210 is closed, the sliding portion 242 is released from the interference with the interference portion 207 and slides along the sliding hole 217. Then, the space portion 241 is separated from the parking portion 208 and rises along the cut-away portion 216. When the first and second shutter portions 211 and 212 are closed, the space portions 241 of the covering members 240 provided at the first and second shutter portions 211 and 212 contact each other to closely contact the clamping area D1 at the inner circumference of the disk D which is the non-information area, so that foreign material such as dust is prevented from intruding in the information area D2. As a result, the disk D closely contacts the upper case 203 by the sealing member 260 and is fixed between the upper and lower cases 203 and 201 by closely contacting the shutter 210 by means of the covering member 240 so that the possibility of the disk cartridge 200 being damaged during carrying is lowered.

### Industrial Applicability

As described above, the disk cartridge according to the present invention has the following effects.

First, since the sealing member closely contacts the clamping area at the inner circumference of the disk when the shutter is closed, intrusion of dust is prevented so that the possibility of the information area of the disk being contaminated is lowered.

Second, since the disk is fixed between the upper and lower cases by means of the sealing member provided around the clamping area at the inner circumference of the disk, while the disk is carried, noise and damage can be reduced.

While this invention has been particularly shown and described with reference to preferred embodiments thereof, it will be understood by those skilled in the art that various changes in form and details may be made therein without departing from the scope of the invention as defined by the appended claims.

## Claims

1. A disk cartridge (200) comprising:
a lower case (201) having an opening hole (202) formed therein;
an upper case (203), installed at the lower case (201) to be capable of being open and shut while pivoting, for accommodating a disk (D) together with the lower case (201);
a shutter (210), installed between the disk (D) and the lower case (201) to be capable of sliding, for opening and shutting the opening hole (202); and
**characterised by**:
a covering member (240) engaged with the shutter (210), moved by the shutter (210) and capable of sliding with respect to the shutter (210), the
covering member (240) closely contacting a non-information area (D1) at an inner circumference of the disk (D) when the shutter (210) is closed and being separated from the non-information area (D1) at an inner circumference of the disk (D) when the shutter (210) is open.

2. The disk cartridge (200) as claimed in claim 1, wherein the covering member (240) comprises:
a space portion (241) having an inclined surface, the space portion (241) closely contacting or being separated from the non-information area (D1) at an inclined circumference of the disk (D) while it rises or is lowered along an inner inclined surface (217a) of a cut-away portion (216) formed in the shutter (210);
a sliding portion (242) sliding along a slot (217) formed in the shutter (210) during opening/shutting of the shutter (210); and
a lever portion (243) connecting the space portion (241) and the sliding portion (242) and to be capable of being elastically deformed.

3. The disk cartridge (200) as claimed in claim 2, wherein a sealing member (260) is provided on the upper surface of the space portion (241) so that the non-information area (D1) at an inner circumference of the disk (D) closely contacts the covering member (240).

4. The disk cartridge (200) as claimed in claim 2, wherein, since an inclined portion (241 a) is provided at the slot (217), when the space portion (241) rises, the sliding portion (242) rises from the lower surface of the shutter (210), and when the space portion (241) is lowered, the sliding portion (242) is lowered to the lower surface of the shutter (210).

5. The disk cartridge (200) as claimed in claim 2, wherein an interference portion (207) for interfering such that the sliding portion (242) is smoothly lowered when the shutter (210) is open is provided at the lower case (201).

6. The disk cartridge (200) as claimed in claim 5, wherein the interference portion (207) is disposed at an angle less than the maximum open angle of the shutter (210).

7. The disk cartridge (200) as claimed in claim 2, wherein a parking portion (208) is formed at the lower case (201) so that the space portion (241) is disposed at the parking portion (208) when the shutter (210) is open.

8. The disk cartridge (200) as claimed in claim 1, wherein a protrusion (220) having an inclined surface and supporting the non-information area (D1) of the disk (D) is provided at the shutter (210) so that, when the shutter (210) is open, the disk (D) rises along the inclined surface to closely contact the upper case (203).

9. The disk cartridge (200) as claimed in claim 8, wherein a protrusion (220) for supporting the non-information area (D1) at the inner circumference of the disk (D) that is lowered along the inclined surface is provided at the lower case (201).

10. The disk cartridge (200) as claimed in claim 8, wherein a sealing member (260) is provided at the upper case (203) at a portion of contacting the non-information area (D1) of the disk (D) so that the disk (D) closely contact the sealing member (260).

## Patentansprüche

1. Datenträgerkassette (200), umfassend:
ein unteres Gehäuseteil (201) mit einem darin ausgebildeten Öffnungsloch (202);
ein oberes Gehäuseteil (203), derart am unteren Gehäuseteil (201) montiert, dass es beim Schwenken offen und geschlossen sein kann, um zusammen mit dem unteren Gehäuseteil (201) einen Datenträger (D) aufzunehmen;
einen Verschluss (210), der derart zwischen dem Datenträger (D) und dem unteren Gehäuseteil (201) montiert ist, dass er verschoben werden kann, zum Öffnen und Verschließen des Öffnungslochs (202); und
**gekennzeichnet durch**:
ein mit dem Verschluss (210) in Eingriff stehendes Abdeckglied (240), dass vom Verschluss (210) bewegt wird und bezüglich des Verschlusses (210) verschoben werden kann, wobei das Abdeckglied (240) in engem Kontakt mit einem Nichtinformationsbereich (D1) an einem inneren Umfang des Datenträgers (D) steht, wenn der Verschluss (210) geschlossen ist, und vom Nichtinformationsbereich (D1) an einem inneren Umfang des Datenträgers (D) getrennt ist, wenn der Verschluss (210) offen ist.

2. Datenträgerkassette (200) nach Anspruch 1, wobei das Abdeckglied (240) Folgendes umfasst:
einen Raumabschnitt (241) mit einer schrägen Fläche, wobei der Raumabschnitt (241) mit dem Nichtinformationsbereich (D1) an einem schrägen Umfang des Datenträgers (D) in engem Kontakt steht oder davon getrennt ist, während er sich an einer inneren schrägen Fläche (217a) eines in dem Verschluss (210) ausgebildeten weggeschnittenen Abschnitts (216) herauf- oder hinabbewegt;
einen Schiebeabschnitt (242), der während des Öffnens/Verschließens des Verschlusses (210) einen Schlitz (217) entlang verschoben wird, der in dem Verschluss (210) ausgebildet ist; und
einen Hebelabschnitt (243), der den Raumabschnitt (241) mit dem Schiebeabschnitt (242) verbindet und elastisch verformbar ist.

3. Datenträgerkassette (200) nach Anspruch 2, wobei ein Dichtungsglied (260) auf der oberen Fläche des Raumabschnitts (241) vorgesehen ist, so dass der Nichtinformationsbereich (D1) an einem inneren Umfang des Datenträgers (D) in engem Kontakt mit dem Abdeckglied (240) steht.

4. Datenträgerkassette (200) nach Anspruch 2, wobei, da ein schräger Abschnitt (241a) an dem Schlitz (217) vorgesehen ist, wenn sich der Raumabschnitt (241) heraufbewegt, sich der Schiebeabschnitt (242) von der unteren Fläche des Verschlusses (210) heraufbewegt, und wenn sich der Raumabschnitt (241) hinabbewegt, sich der Schiebeabschnitt (242) zu der unteren Fläche des Verschlusses (210) hinabbewegt.

5. Datenträgerkassette (200) nach Anspruch 2, wobei am unteren Gehäuseteil (201) ein Eingriffabschnitt (207) zum derartigen Eingreifen, dass der Schiebeabschnitt (242) gleichmäßig hinabbewegt wird, wenn der Verschluss (210) offen ist, vorgesehen ist.

6. Datenträgerkassette (200) nach Anspruch 5, wobei der Eingriffabschnitt (207) unter einem Winkel angeordnet ist, der weniger als der maximale Offenwinkel des Verschlusses (210) ist.

7. Datenträgerkassette (200) nach Anspruch 2, wobei am unteren Gehäuseteil (201) ein Parkabschnitt (208) ausgebildet ist, so dass sich der Raumabschnitt (241) am Parkabschnitt (208) befindet, wenn der Verschluss (210) offen ist.

8. Datenträgerkassette (200) nach Anspruch 1, wobei ein Vorsprung (220), der eine schräge Fläche aufweist und den Nichtinformationsbereich (D1) des Datenträgers (D) stützt, am Verschluss (210) vorgesehen ist, so dass, wenn der Verschluss (210) offen ist, der Datenträger (D) sich die schräge Fläche entlang hinaufbewegt, um in engen Kontakt mit dem oberen Gehäuseteil (203) zu treten.

9. Datenträgerkassette (200) nach Anspruch 8, wobei ein Vorsprung (220) zum Stützen des Nichtinformationsbereichs (D1) am inneren Umfang des Datenträgers (D), der sich die schräge Fläche entlang hinabbewegt, am unteren Gehäuseteil (201) vorgesehen ist.

10. Datenträgerkassette (200) nach Anspruch 8, wobei ein Dichtungsglied (260) am oberen Gehäuseteil (203) an einem Abschnitt des Kontakts mit dem Nichtinformationsbereich (D1) des Datenträgers (D) vorgesehen ist, so dass der Datenträger (D) in engem Kontakt mit dem Dichtungsglied (260) steht.

## Revendications

1. Cartouche de disque (200) comprenant :
un étui inférieur (201) dans lequel est formé un trou d'ouverture (202) ;
un étui supérieur (203), monté sur l'étui inférieur (201), afin qu'il puisse être ouvert et fermé par pivotement afin de recevoir un disque (D) conjointement avec l'étui inférieur (201) ;
un volet (210), monté entre le disque (D) et l'étui inférieur (201) afin qu'il puisse coulisser, pour ouvrir et fermer le trou d'ouverture (202) ; et
**caractérisé par** :
un élément formant couvercle (240) s'engageant sur le volet (210), déplacé par le volet (210) et capable de coulisser par rapport au volet (210), l'élément formant couvercle (240) venant en contact étroit avec une zone ne contenant pas d'informations (D1) au niveau d'une circonférence interne du disque (D) lorsque le volet (210) est fermé et étant séparé de la zone ne contenant pas d'informations (D1) au niveau d'une circonférence interne du disque (D) lorsque le volet (210) est ouvert.

2. Cartouche de disque (200) selon la revendication 1, dans laquelle l'élément formant couvercle (240) comprend :
une partie d'espacement (241) ayant une surface inclinée, la partie d'espacement (241) venant en contact étroit avec, ou étant séparée de la zone ne contenant pas d'informations (D1) au niveau d'une circonférence inclinée du disque (D) pendant qu'il s'élève ou qu'il s'abaisse le long d'une surface interne inclinée (217a) d'une partie découpée (216) formée dans le volet (210) ;
une partie coulissante (242) coulissant le long d'une fente (217) formée dans le volet (210) pendant l'ouverture/la fermeture du volet (210) ; et
une partie formant levier (243) raccordant la partie d'espacement (241) à la partie coulissante (242) afin qu'elle puisse se déformer élastiquement.

3. Cartouche de disque (200) selon la revendication 2, dans laquelle un élément d'étanchéité (260) est prévu sur la surface supérieure de la partie d'espacement (241) afin que la zone ne contenant pas d'informations (D1) au niveau d'une circonférence interne du disque (D) vienne en contact étroit avec l'élément formant couvercle (240).

4. Cartouche de disque (200) selon la revendication 2, dans laquelle, comme une partie inclinée (241a) est prévue au niveau de la fente (217), lorsque la partie d'espacement (241) s'élève, la partie coulissante (242) s'élève à partir de la surface inférieure du volet (210), et lorsque la partie d'espacement (241) s'abaisse, la partie coulissante (242) s'abaisse jusqu'à la surface inférieure du volet (210).

5. Cartouche de disque (200) selon la revendication 2, dans laquelle une partie de freinage (207) destinée à produire un freinage tel que la partie coulissante (242) s'abaisse en douceur lorsque le volet (210) s'ouvre, est prévue au niveau de l'étui inférieur (201).

6. Cartouche de disque (200) selon la revendication 5, dans laquelle la partie de freinage (207) est disposée selon un angle inférieur à l'angle d'ouverture maximal du volet (210).

7. Cartouche de disque (200) selon la revendication 2, dans laquelle une partie de parcage (208) est formée dans l'étui inférieur (201) afin que la partie d'espacement (241) soit placée dans la partie de parcage (208) lorsque le volet (210) est ouvert.

8. Cartouche de disque (200) selon la revendication 1, dans laquelle une protubérance (220) ayant une surface inclinée et supportant la zone ne contenant pas d'informations (D1) du disque (D) est prévue au niveau du volet (210) afin que lorsque le volet (210) s'ouvre, le disque (D) s'élève le long de la surface inclinée pour venir en contact étroit avec l'étui supérieur (203).

9. Cartouche de disque (200) selon la revendication 8, dans laquelle une protubérance (220) destinée à soutenir la zone ne contenant pas d'informations (D1) au niveau de la circonférence interne du disque (D), qui s'abaisse le long de la surface inclinée, est prévue sur l'étui inférieur (201).

10. Cartouche de disque (200) selon la revendication 8, dans laquelle un élément d'étanchéité (260) est prévu sur l'étui supérieur (203) dans une partie de contact de la zone ne contenant pas d'informations (D1) du disque (D), afin que le disque (D) vienne en contact étroit avec l'élément d'étanchéité (260).
